# EUROPÄISCHE PATENTANMELDUNG

(11) **EP 1 548 915 A1**
(43) Veröffentlichungstag der Anmeldung: **29.06.2005**
(21) Anmeldenummer: 03029794.9
(22) Anmeldetag: 23.12.2003
(51) Int. Cl.: H02K 5/14, H02K 11/00

(54) **Bürstenträger und elektromotorischer Antrieb mit dem Bürstenträger**

(71) Anmelder: SIEMENS AKTIENGESELLSCHAFT, 80333 München (DE)
(72) Erfinder: Bass, Martin, 97074 Würzburg (DE); Hessdörfer, Robert, 97753 Karlstadt-Stetten (DE)

(57) **Zusammenfassung**

Ein elektromotorischer Antrieb hat einen Stator, einen Anker mit Kommutatorlamellen und einen Bürstenträger (8). Der Bürstenträger (8) hat Bürsten (18), über die die Kommutatorlamellen (6) kontaktiert sind. Der Bürstenträger (8) hat ferner eine Anordnung, über die die Bürsten (18) elektrisch kontaktiert sind. Die Anordnung umfasst mindestens eine Schmelzsicherung (22) , die im geschmolzenen Zustand die elektrische Kontaktierung mindestens einer Bürste (18) unterbricht.

## Beschreibung

Die Erfindung betrifft einen Bürstenträger für einen elektromotorischen Antrieb und einen elektromotorischen Antrieb mit dem Bürstenträger. Bekannte elektromotorische Antriebe haben einen Stator, einen Anker mit Kommutatorlamellen und einen Bürstenträger, dessen Bürsten die Kommutatorlamellen kontaktieren. Ferner ist regelmäßig eine Anordnung vorgesehen, über die die Bürsten elektrisch kontaktiert sind.

Derartige Antriebe werden beispielsweise in Kraftfahrzeugen als Antriebe eines Frischluftgebläses, einer Heizung oder einer Klimaanlage eingesetzt. Solche Antriebe sind möglichst kompakt und gleichzeitig kostengünstig auszubilden.

Aus der US 5,000,662 ist eine Gebläseeinheit für eine Klimaanlage eines Kraftfahrzeugs bekannt, die einen elektromotorischen Antrieb umfasst, der in einer Ausnehmung eines Luftführungsgehäuses angeordnet ist und auf dessen Abtriebswelle ein Lüfterrad angeordnet ist. Durch das Drehen des Lüfterrads wird eine Luftströmung von einem Einlass hin zu einer Heizeinheit erzeugt. Eine Widerstands-Schaltungsanordnung, die auf einem Keramiksubstrat angeordnet ist, das durch eine weitere Ausnehmung des Luftführungsgehäuses beabstandet zu der Ausnehmung, in der der elektromotorische Antrieb angeordnet ist, in dem Luftführungsgehäuse angeordnet ist. In der Widerstands-Schaltungsanordnung sind mehrere Dickschichtwiderstände ausgebildet und in Serie geschaltet. Mittels entsprechender Kontaktierungen sind abhängig von einer Schaltstellung eines Schalters eine oder mehrere Widerstände seriell mit dem Antrieb verschaltbar. Zwischen den Widerständen sind Schmelzsicherungen ausgebildet, die schmelzen, wenn die Widerstands-Schaltungsanordung überhitzt wird, was dann dazu führt, dass der elektromotorische Antrieb nicht mehr mit Strom versorgt wird. Eine derartige Widerstands-Schaltungsanordnung ist relativ aufwändig.

Die Aufgabe der Erfindung ist es, einen einfachen und gleichzeitig sicheren Bürstenträger und einen elektromotorischen Antrieb mit dem Bürstenträger zu schaffen.

Die Aufgabe wird gelöst durch die Merkmale der unabhängigen Patentansprüche. Vorteilhafte Ausgestaltungen der Erfindung sind in den Unteransprüchen gekennzeichnet.

Bezüglich des Bürstenträgers zeichnet sich die Erfindung aus durch einen Bürstenträger mit Bürsten, über die Kommutatorlamellen eines elektromotorischen Antriebs kontaktierbar sind, und mit einer Anordnung, über die die Bürsten elektrisch kontaktiert sind, wobei die Anordnung mindestens eine Schmelzsicherung umfasst, die im geschmolzenen Zustand die elektrische Kontaktierung mindestens einer Bürste unterbricht.

Bezüglich des elektromotorischen Antriebs zeichnet sich die Erfindung aus durch einen elektromotorischen Antrieb mit einem Stator, mit einem Anker mit Kommutatorlamellen und mit dem Bürstenträger, dessen Bürsten die Kommutatorlamellen kontaktieren.

Dadurch dass die Anordnung die Schmelzsicherung umfasst, kann kostengünstig gewährleistet werden, dass der Bürstenträger bzw. der elektromotorische Antrieb nicht mit einem zu hohen Strom belastet wird, der zu seiner thermischen Zerstörung führt. Dies kann durch das Anordnen der Schmelzsicherung in der Anordnung auch sehr kostengünstig gewährleistet werden. Ferner ist die Schmelzsicherung einfach für verschiedene Bürstenträger entsprechend anpassbar, ohne dass es notwendig ist, eine regelmäßig zusätzlich vorhandene elektronische Steuereinheit anzupassen. Darüber hinaus ergibt sich der Vorteil, dass bei einer nicht bestimmungsgemäßen Erhitzung des Bürstenträgers bei geeigneter Ausgestaltung der Schmelzsicherung diese schmilzt und so den Stromfluss hin zu den Bürsten unterbricht, was den Bürstenträger zusätzlich schützt.

In einer vorteilhaften Ausgestaltung des Bürstenträgers umfasst die Anordnung ein Stanzgitter, in dem die Schmelzsicherung ausgebildet ist, oder andere elektrisch leitfähige Verbindungen, die als Schmelzsicherung ausgebildet sind. Eine derartige Schmelzsicherung ist besonders kostengünstig herstellbar. So kann sie durch Freistanzen, Schneiden, Erodieren oder Verprägen einfach gebildet werden.

In einer weiteren vorteilhaften Ausgestaltung des Bürstenträgers ist die Schmelzsicherung eng beabstandet zu einer Drossel und/oder einer Bürste angeordnet. Dies hat den Vorteil, dass die Drossel und/oder die Bürste, die temperaturempfindliche Bauelemente sind, sicher und einfach vor thermischer Zerstörung geschützt sind.

Ausführungsbeispiele der Erfindung sind im folgenden anhand der schematischen Zeichnungen erläutert. Es zeigen:
- Figur 1: einen elektromotorischen Antrieb mit einem Bürstenträger 8,
- Figur 2: den Bürstenträger 8 in einer Draufsicht,
- Figur 3: eine Ausschnittsvergrößerung des Bürstenträgers 8 gemäß Figur 2,
- Figur 4: eine Seitenansicht des Bürstenträgers 8 in einer weiteren Ausführungsform und
- Figur 5: eine Ausschnittsvergrößerung des Bürstenträgers 8 gemäß Figur 4.

Elemente gleicher Konstruktion und Funktion sind figurenübergreifend mit den gleichen Bezugszeichen versehen.

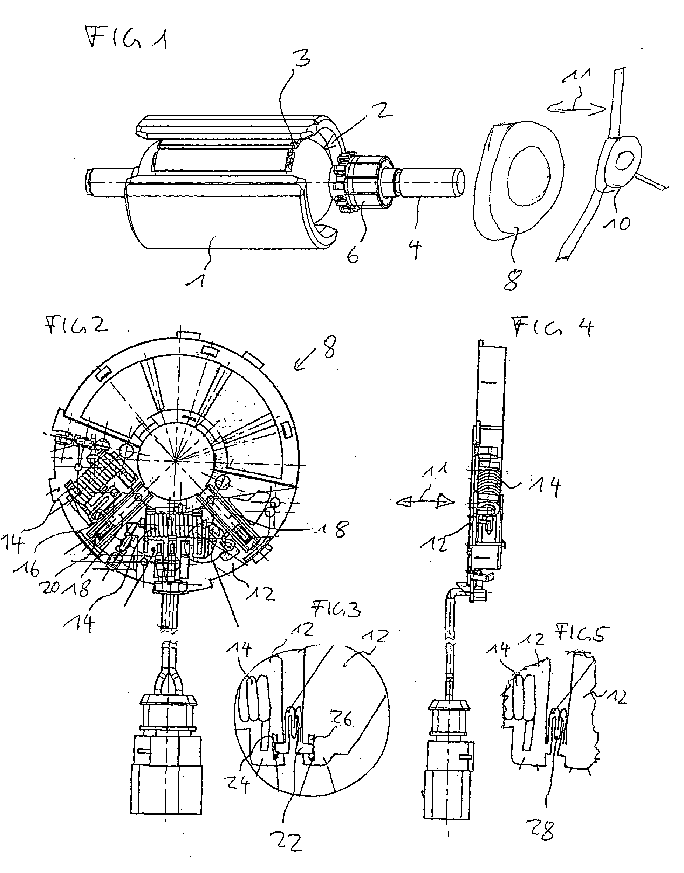

Ein elektromotorischer Antrieb (Figur 1) hat ein nicht dargestelltes Motorgehäuse, in dem Permanentmagnete 1 angeordnet sind. Das Motorgehäuse und die Permantmagnete bilden einen Stator. Ferner umfasst der elektromotorische Antrieb einen Anker 2, auf dem Spulen 3 ausgebildet sind und der eine Welle 4 umfasst, auf der Kommutatorlamellen 6 angeordnet sind, die mit den jeweiligen Wicklungen der Spulen 3 elektrisch leitend verbunden sind.

Ferner ist ein Bürstenträger 8 vorgesehen, der auf die Kommutatorlamellen 6 geschoben ist im fertig montierten Zustand des elektromotorischen Antriebs. Die Welle 4 ist mit einem Lüfterrotor 10 mechanisch gekoppelt im fertig montierten Zustand des elektromotorischen Antriebs und treibt diesen an. Bevorzugt ist der Lüfterrotor 10 so ausgebildet, dass bei seiner Drehung um die Achse der Welle 4 die Luft in der mit dem Pfeil 11 gekennzeichneten Richtung strömt. Der Lüfterrotor 10 kann jedoch alternativ auch so ausgebildet sein, dass die Luft in einer anderen Richtung strömt.

Der Bürstenträger 8 (Figur 2) umfasst metallische elektrisch leitfähige Verbindungen zwischen den nachfolgend erläuterten Komponenten auf dem Bürstenträger 8, welche vorteilhaft aus einer Metallplatte ausgestanzt sind und im folgenden als Stanzgitter 12 bezeichnet ist und das bevorzugt teilweise mit Kunststoff umspritzt ist. Mit dem Stanzgitter 12 sind Drosseln 14 elektrisch leitend verbunden, die als Spulen ausgebildet sind. Ferner sind in dem Bürstenträger 8 Bürstenkammern 16 ein- oder mehrteilig ausgebildet, die Bürsten 18 aufnehmen und ebenfalls jeweils eine Feder 20 aufnehmen, über die die Bürsten gegen die Kommutatorlamellen 6 gedrückt werden, wenn der Bürstenträger 8 in dem elektromotorischen Antrieb montiert ist. Die Bürsten sind bevorzugt als Kohlebürsten ausgebildet und werden bevorzugt mittels einer Litze mit dem Stanzgitter 12 elektrisch leitend verbunden.

Das Stanzgitter 12 hat einen ersten Halter 24 (Figur 3) und einen zweiten Halter 26, die vorzugsweise durch einfaches Anprägen eines vorgegebenen Bereichs gebildet werden. In den Haltern 24, 26 ist eine Schmelzsicherung 22 befestigt, vorzugsweise durch eine Steckverbindung, durch Löten, Schweißen, Crimpen oder Klemmen.

Die Schmelzsicherung 22 ist so ausgebildet, dass sie bei einer vorgegebenen Temperatur schmilzt, was dann zur Folge hat, dass die elektrische Verbindung der Bürste 18 zu einer Stromversorgung des Bürstenträgers 8 unterbrochen ist. Bevorzugt ist die Schmelzsicherung 22 eng beabstandet zu der Drossel 14 und/oder der Bürste 18 angeordnet. Dies hat dann den Vorteil, dass die Schmelzsicherung bei einer übermäßigen Erhitzung der Drossel 14 bzw. der Bürste 18 schmilzt und so die Drossel 14 bzw. die Bürste 18 vor einer thermischen Zerstörung schützt. Besonders vorteilhaft ist es, wenn die Schmelzsicherung 22 in dem Luftstrom liegt, der durch eine Drehung des Lüfterrotors 10 erzeugt wird. In diesem Fall spricht die Schmelzsicherung 22 noch schneller an, d.h. sie schmilzt, wenn der elektromotorische Antrieb blockiert oder sehr schwergängig ist. Ein derartiges Blockieren oder eine Schwergängigkeit können auftreten, wenn Fremdkörper den Lüfterrotor 10 blockieren oder in den Antrieb gelangt sind oder wenn Bauteile in dem Antrieb versagen, wie z.B. bei eine Lagerverklemmung. In diesem Fall nimmt der Luftstrom, der die Schmelzsicherung 22 kühlt, sehr schnell ab und somit spricht die Schmelzsicherung 22 bei entsprechenden Stromfluss durch sie sehr schnell an, wodurch der elektromotorische Antrieb sehr wirkungsvoll gegen eine thermische Zerstörung geschützt wird.

Die Schmelztemperatur und/oder die Geometrie und/oder das Material der Schmelzsicherung ist so gewählt, dass sie die oben beschriebene Sicherungsfunktion zuverlässig erfüllt.

Besonders einfach ist die Schmelzsicherung 22 in der Ausführungsform des Bürstenträgers gemäß Figur 4 und 5 dadurch ausgebildet, dass ein Bereich 28 des Stanzgitters 12 als Schmelzsicherung ausgebildet ist. Dies kann besonders kostengünstig hergestellt werden durch entsprechendes Freistanzen, und/oder Schneiden und/oder Erodieren und/oder Verprägen des Stanzgitters 12.

## Patentansprüche

1. Bürstenträger für einen elektromotorischen Antrieb mit Bürsten (18), über die Kommutatorlamellen (6) des elektromotorischen Antriebs kontaktierbar sind, und mit einer Anordnung, über die die Bürsten (18) elektrisch kontaktiert sind, wobei die Anordnung mindestens eine Schmelzsicherung (22) umfasst, die im geschmolzenen Zustand die elektrische Kontaktierung mindestens einer Bürste unterbricht.

2. Bürstenträger nach Anspruch 1,
bei dem die Anordnung ein Stanzgitter (12) umfasst, in dem die Schmelzsicherung (22) ausgebildet ist, oder andere elektrisch leitfähige Verbindungen umfasst, die als Schmelzsicherung (22) ausgebildet sind.

3. Bürstenträger nach einem der vorstehenden Ansprüche,
bei dem die Schmelzsicherung (22) eng beabstandet zu einer Drossel (14) und/oder der Bürste (18) angeordnet ist.

4. Elektromotorischer Antrieb mit einem Stator, mit einem Anker (2) mit Kommutatorlamellen (6) und mit einem Bürstenträger (8) nach einem der vorstehenden Ansprüche, dessen Bürsten (18) die Kommutatorlamellen (6) kontaktieren.
